(19) **Europäisches Patentamt**

**European Patent Office**

**Office européen des brevets**

(11) **EP 0 890 482 B1**

(12) **EUROPÄISCHE PATENTSCHRIFT**

(45) Veröffentlichungstag und Bekanntmachung des Hinweises auf die Patenterteilung:
**10.08.2005 Patentblatt 2005/32**

(51) Int Cl.⁷: **B60R 16/02**

(21) Anmeldenummer: **98111862.3**

(22) Anmeldetag: **26.06.1998**

(54) **Verfahren zur Erkennung einer spontanen Dynamikanforderung eines Führers eines Kraftfahrzeuges**

Method for recognizing a spontaneously dynamic vehicle driver request

Procédé pour reconnaître une demande dynamique spontanée d'un conducteur d'automobile

(84) Benannte Vertragsstaaten:
**FR GB IT**

(30) Priorität: **09.07.1997 DE 19729251**

(43) Veröffentlichungstag der Anmeldung:
**13.01.1999 Patentblatt 1999/02**

(73) Patentinhaber: **DaimlerChrysler AG**
**70567 Stuttgart (DE)**

(72) Erfinder:
• **Gimmler, Helmut**
**71409 Schwaikheim (DE)**
• **Heidinger, Andreas**
**73650 Winterbach (DE)**
• **Kuhn, Klaus-Peter, Dr.**
**73655 Plüdershausen (DE)**

(56) Entgegenhaltungen:
EP-A- 0 622 570        EP-A- 0 777 071
DE-A- 4 322 476        US-A- 4 679 145
US-A- 5 285 523

• **PATENT ABSTRACTS OF JAPAN vol. 006, no. 046 (P-107), 24. März 1982 (1982-03-24) & JP 56 163417 A (MITSUWA SEIKI CO LTD), 16. Dezember 1981 (1981-12-16)**

**Beschreibung**

Die vorliegende Erfindung betrifft ein Verfahren zur Erkennung einer spontanen Dynamikanforderung eines Führers eines Kraftfahrzeuges nach dem Oberbegriff des Patentanspruches 1, wonach das Ausmaß der Betätigung einer Betätigungseinrichtung mit einem Schwellwert verglichen wird und wobei die Dynamikanforderung erkannt wird, wenn das Ausmaß oberhalb eines bestimmten Schwellwertes liegt.

Ein solches Verfahren ist beispielsweise bekannt als Kick-Down-Schalter. Mit einem solchen Schalter wird die Endstellung eines Fahrpedals erkannt. Daraus wird abgeleitet, daß der Fahrzeugführer eine maximale Beschleunigung will. Es wird dann in ein Motor-GetriebeManagement eingegriffen, um eine maximale Beschleunigung des Fahrzeuges zu erreichen. Beispielsweise wird dazu bei einem Automatikgetriebe selbsttätig heruntergeschaltet. Ebenso ist es der Anmelderin in diesem Zusammenhang bekannt, anstelle des Erreichens einer vorgegebenen Winkelposition die Betätigungsgeschwindigkeit des Fahrpedals auszuwerten.

Die Schwelle ist dabei fest vorgegeben und muß von jedem Fahrzeugführer unabhängig von dessen Fahrstil in derselben Weise überschritten werden.

Weiterhin ist es aus der DE 33 41 652 C2 bekannt, die Schwellwerte der Betätigung eines Fahrpedales, bei denen ein Herunterschalten zum Erzielen einer besseren Beschleunigung erfolgt, an die Fahrweise, das heißt, die normale Betätigung des Fahrpedales durch den Fahrzeugführer, anzupassen. Dabei erfolgt bei einer als sportlich erkannten Fahrweise ein früheres Herunterschalten. Dies bedeutet, daß die Schwellwerte abgesenkt werden. Bei einer als sportlich erkannten Fahrweise wird also zur Erzielung einer besseren Beschleunigung bei einem geringeren Ausmaß der Betätigung des Fahrpedales zurückgeschaltet als bei einer als ruhig erkannten Fahrweise.

Die EP-A-0 777 071 beschreibt ein gattungsgemäßes Verfahren zur Steuerung eines automatischen Getriebes als Funktion der Fahrweise des Fahrers, bei welchem automatisch zwischen verschiedenen Funktionsmodi des Getriebes umgeschaltet wird. Dazu wird ein Aktivitätskoeffizient unter anderem auf Grund einer aktuellen Betätigungsgeschwindigkeit eines Fahrpedals und ein Korrekturterm, indem die Betätigungsgeschwindigkeit des Fahrpedals ermittelt und in bestimmten Fahrsituationen ausgewertet wird, bestimmt. Dabei wird bei einer hohen aktuellen Betätigungsgeschwindigkeit ein großer Aktivitätskoeffizient festgelegt. Der Korrekturterm ist ein Maß dafür, wie der Fahrer das Fahrpedal normalerweise betätigt, also in der Vergangenheit, betätigt hat. Der Korrekturterm wird groß, wenn der Fahrer das Fahrpedal normalerweise mit einer großen Betätigungsgeschwindigkeit betätigt. Der Korrekturterm wird zum Aktivitätskoeffizient aufaddiert und die entstehende Summe wird mit, festen Schwellwerten verglichen. Damit wird der auszuwählende Funktionsmodus bestimmt, wobei bei einem großen Aktivitätskoeffizienten ein sportlicher Funktionsmodus ausgewählt wird.

Die EP-A- 0 622 570 beschreibt eine Steuerung für ein automatisches Kraftfahrzeuggetriebe. Die Steuerung verfügt über mehrere Schaltkennfelder, zwischen welchen auf Grund einer Beurteilung der Fahrweise des Fahrers umgeschaltet werden kann. Zusätzlich können Schaltkennlinien bzw. Schaltpunkte in den Schaltkennfeldern verschoben werden.

Die Verstell- bzw. Betätigungsgeschwindigkeit eines Fahrpedals und die Betätigungsgeschwindigkeit in der Vergangenheit in Form einer Fahrpedalaktivität gehen in die Bewertung der Fahrweise des Fahrers ein. Diese Größen werden zusammen mit anderen Größen mittels nicht weiter beschriebenen Fuzzy-Regeln verarbeitet. Durch Vergleich der Bewertung der Fahrweise mit Grenzwerten wird eines der verfügbaren Kennfelder ausgewählt.

Es ist die Aufgabe der Erfindung, ein Verfahren vorzuschlagen, mit dem eine im Vergleich zu einer bisherigen Fahrweise plötzliche Änderung des Verhaltens des Fahrzeugführers in Richtung höherer Dynamik erkannt wird.

Diese Aufgabe wird bei dem Gegenstand der vorliegenden Anmeldung erfindungsgemäß gelöst, indem zur Erkennung einer spontanen Dynamikanforderung bei einer als sportlich erkannten Fahrweise eine größere aktuelle Betätigungsgeschwindigkeit (dpw) notwendig ist als bei einer als ruhig erkannten Fahrweise. Bei einer als sportlich erkannten Fahrweise betätigt der Fahrzeugführer das Fahrpedal normalerweise mit einer großen Betätigungsgeschwindigkeit, bzw. hat der Fahrzeugführer das Fahrpedal in der Vergangenheit mit einer großen Betätigungsgeschwindigkeit betätigt. Bei einer als ruhig erkannten Betätigungsweise Fahrweise betätigt der Fahrzeugführer das Fahrpedal normalerweise mit einer niedrigen Betätigungsgeschwindigkeit.

Vorteilhaft wird es erfindungsgemäß möglich, zwischen einem Fahrzeugführer mit einem ruhigen Fahrstil und einem Fahrzeugführer mit einem eher sportlichen Fahrstil zu unterscheiden. Bei einem fest eingestellen Schwellwert kann die Einstellung des Schwellwertes nämlich nur für einen bestimmten Typ des Fahrzeugführers optimal getroffen werden. Ist das Fahrzeug auf einen Fahrzeugführer mit einem eher sportlichen Fahrstil abgestimmt, muß die Betätigungseinrichtung vergleichsweise heftig betätigt werden, bis eine spontane Dynamikanforderung für eine weidere Erhonung der sportlichleit erkannt wird. Eine solche Auslegung führt unter Umständen bei Fahrzeugführern mit einem eher ruhigen Fahrstil zu Schwierigkeiten, weil diese die Betätigungseinrichtung auch dann nicht heftig genug betätigen, wenn sie eine spontane Dynamikanforderung wollen. Wird andererseits der Schwellwert auf einen Fahrzeugführer mit einem eher ruhigen Fahrstil abgestimmt, kann es bei einem Fahrzeugführer mit einem eher sportlichen Fahrstil dazu kommen, daß dieser die Betätigungseinrichtung so betätigt, daß eine spontane Dynamikanforderung erkannt wird, obwohl noch eine für diesen Fahrzeugführer normale Fahrsituation vorliegt.

Erfindungsgemäß kann den Umständen unterschiedlicher Fahrweisen Rechnung getragen werden: Ein ruhiger Fahrer kann die Fahrweise mit moderater Betätigungsgeschwindigkeit des Fahrpedals sportlicher gestalten, während der sportliche Fahrer für eine weitere Erhöhung der Sportlichkeit das Fahrpedal mit einer hohen Betätigungsgeschwindigkeit betätigen muß. Ausgehend von einer ruhigen Fahrweise ergibt sich eine Erhöhung der Sportlichkeit somit mit einem "progressiven" Adaptionsverhalten.

Vorteilhaft wird dabei insbesondere die Betätigungsrichtung ausgewertet. Das heißt, daß eine spontane Dynamikanforderung nur dann erkannt wird, wenn das Fahrpedal in Richtung einer Beschleunigung bewegt wird.

Bei dem Verfahren nach Anspruch 2 erfolgt die Berücksichtigung, wie der Fahrzeugführer die Betätigungseinrichtung normalerweise betätigt, indem laufend das Ausmaß der Betätigung der Betätigungseinrichtung ermittelt wird und hinsichtlich des Ausmaßes zumindest in bestimmten Fahrsituationen statistisch ausgewertet wird.

Die Auswertung hinsichtlich der bestimmten Fahrsituationen kann beispielsweise nach dem Verfahren der DE 44 01 416 A1 erfolgen, nach dem verschiedene Fahrstile nach jeweils mehreren Kennziffern beschrieben werden. Es erfolgt dabei eine separate Bewertung der Kennziffern für die Längsbeschleunigung, die Querbeschleunigung und die Verzögerung. Für die Anwendung im hier vorliegenden Verfahren wird vorteilhaft die Kennziffer der Längsbeschleunigung herangezogen. Es können dabei vorteilhaft die Beschleunigungen herangezogen werden, bei denen das Kraftfahrzeug um ca. 10 km/h beschleunigt wird. Für die statistische Auswertung kann beispielsweise bei jeder dieser Fahrzeugbeschleunigungen die maximale Fahrpedalgeschwindigkeit ermittelt und entsprechend weiter verarbeitet werden. Diese Werte sind dabei nicht normalverteilt, weil ein Fahrer das Fahrpedal beliebig langsam aber nicht beliebig schnell treten kann. Es kann beispielsweise der Median med und die Standardabweichung sig bestimmt werden. Die individuelle Empfindlichkeit des Fahrzeugführers emp kann berechnet werden nach der Formel:

$$emp = med + sig * f.$$

Mit dem Faktor f wird die Empfindlichkeit des Algorithmus abgestimmt.

Bei dem Verfahren nach Anspruch 3 erhalten bei der Auswertung die Werte der jüngeren Vergangenheit eine größere Gewichtung als die Werte der länger zurückliegenden Vergangenheit.

Dadurch wird das Verfahren vorteilhaft auch auf einen wechselnden Fahrstil des Fahrzeugführers oder auch auf einen anderen Fahrzeugführer adaptiert.

Bei dem Verfahren nach Anspruch 4 wird die erfaßte Winkelstellung des Fahrpedals gefiltert und differenziert, wobei bei einer Rücknahme des Fahrpedals mit einer Winkelgeschwindigkeit oberhalb einer Schwelle die Filterung unterbunden wird.

Durch die Filterung können kurzzeitige Signalschwankungen für die Auswertung unterdrückt werden. Indem die Filterung bei einer schnellen Rücknahme des Fahrpedals unterbunden wird, werden gegebenenfalls erwünschte Fahrzeugverzögerungen schnellstmöglich umgesetzt.

Bei dem Verfahren nach Anspruch 5 bleibt bei einer erkannten Dynamikanforderung diese für einige Zeit bestehen, wobei diese Zeit länger ist bei einer sportlichen Fahrweise als bei einer ruhigen Fahrweise.

Dadurch wird vorteilhaft ein sprunghafter Wechsel des Fahrverhaltens vermieden. Ebenso wird auch hier wieder dem individuellen Fahrstil Rechnung getragen.

Bei dem Verfahren nach Anspruch 6 wird für die erkannte Dynamikanforderung eine Variable bzw. ein Bit gesetzt, wobei diese Variable bzw. das Bit gesetzt wird, sobald die Dynamikanforderung erkannt wird. Die Variable bzw. das Bit wird zurückgesetzt, sobald die Bedingungen der Dynamikanforderung nicht mehr vorliegen und der Fahrpedalwinkel gleich 0 ist.

Dadurch wird das Verfahren einfach ausführbar auf einem Mikroprozessor. Indem die Variable bzw. das Bit erst dann zurückgesetzt wird, wenn der Fahrpedalwinkel gleich 0 ist, können "Sprünge" im Fahrverhalten des Fahrzeuges vermieden werden. Dies verbessert sowohl den Fahrkomfort als auch die Fahrsicherheit.

Bei dem Verfahren nach Anspruch 7 wird der Schwellwert abhängig von der Fahrweise des Fahrzeugführers verändert.

Bei dem Verfahren nach Anspruch 8 wird bei einer erkannten nervösen Bedienung des Fahrzeuges durch den Fahrzeugführer die Erkennung einer spontanen Dynamikanforderung ausgesetzt.

Dadurch wird vorteilhaft ein fehlerhafter Eingriff in das Motor-/Getriebemanagement vermieden.

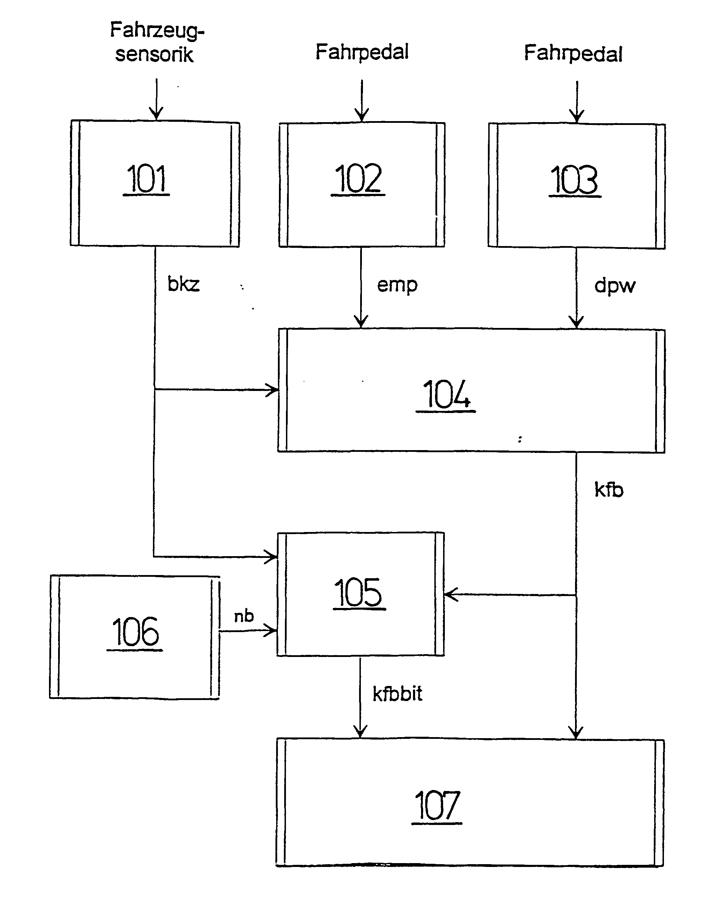

Ein Ausführungsbeispiel der Erfindung ist in der Zeichnung näher dargestellt. Die Figur zeigt dabei ein Blockdiagramm der wesentlichen Elemente zur Durchführung des Verfahrens in ihrem Zusammenwirken.

In dem Block 101 wird anhand von zugeführten Signalen und Daten der Fahrzeugsensorik eine Fahrertypklassifikation durchgeführt. Mit dieser Fahrertypklassifikation kann ein sportliches Fahrverhalten von einem eher ruhigen Fahrverhalten unterschieden werden. Die Durchführung dieser Fahrertypklassifikation kann beispielsweise nach dem in der DE 44 01 416 A1 beschriebenen Verfahren erfolgen, nach dem verschiedene Fahrstile nach jeweils mehreren Kennziffern beschrieben werden. Es erfolgt dabei eine separate Bewertung der Kennziffern für die Längsbeschleunigung, die Querbeschleunigung und die Verzögerung. Für die Anwendung im hier vorliegenden Verfahren wird vorteilhaft die Kennziffer der Längsbeschleunigung bkz herangezogen.

In dem Block 102 erfolgt die statistische Ermittlung der individuellen Empfindlichkeit emp. Es können dabei vorteilhaft die Beschleunigungen herangezogen werden, bei denen das Kraftfahrzeug in einem vorgegebenen Zeitintervall um ca. 10 km/h beschleunigt wird. Die statistische Ermittlung kann beispielsweise bei jedem signifikanten Beschleunigungsmanöver entsprechend der Beschreibung des Verfahrens in der DE 44 01 416 A1 durchgeführt werden.

Für die statistische Auswertung kann beispielsweise in dem Block 102 bei jeder dieser Fahrzeugbeschleunigungen die maximale Fahrpedalgeschwindigkeit ermittelt und entsprechend weiter verarbeitet werden. Um eine Aussage über die statistische Verteilung dieser Maximalwerte zu erhalten, werden die neuesten Werte in aufsteigender Reihenfolge in ein Feld einsortiert. Dadurch wird auch sichergestellt, daß alte Werte nach einiger Zeit verworfen werden. Die Werte der jüngeren Vergangenheit erhalten also bei der Auswertung eine größere Gewichtung als die Werte der länger zurückliegenden Vergangenheit. Die Werte sind dabei nicht normalverteilt, weil ein Fahrer das Fahrpedal beliebig langsam aber nicht beliebig schnell treten kann. Es kann beispielsweise der Median med und die Standardabweichung sig bestimmt werden. Die individuelle Empfindlichkeit des Fahrzeugführers emp kann berechnet werden nach der Formel:

$$emp = med + sig * f.$$

Mit dem Faktor f wird die Empfindlichkeit des Algorithmus abgestimmt.

In dem Block 103 wird aus dem Signal der Winkelposition des Fahrpedals die Betätigungsgeschwindigkeit des Fahrpedals dpw als zeitliche Ableitung der Winkelposition des Fahrpedales bestimmt. Das Signal wird dabei noch gefiltert. Bei einer schnellen Rücknahme des Fahrpedales kann vorteilhaft die Filterung unterbunden werden, um auf diese Anforderung einer Fahrzeugverzögerung ohne Verzug zu reagieren.

Wenn die Betätigung des Fahrpedales in Richtung einer Beschleunigung erfolgt, wird in dem Block 104 die in dem Block 103 ermittelte positive Betätigungsgeschwindigkeit des Fahrpedales dpw mit der in dem Block 102 ermittelten individuellen Empfindlichkeit emp gewichtet. Diese Größe kfb wird nach folgender Gleichung ermittelt:

$$kfb = dpw / emp .$$

Bei einer Rücknahme des Fahrpedales wird kfb über einen Tiefpaß verringert. Die Zeitkonstante dieses Tiefpasses wird vorteilhaft mit der Größe bkz modifiziert, so daß bei einer sportlichen Fahrweise der Wert kfb länger erhalten bleibt als bei einer ruhigen Fahrweise.

In dem Block 105 wird überprüft, ob eine spontane Dynamikanforderung vorliegt. Dazu wird der Wert kfb mit einem Schwellwert verglichen. Wenn der Wert kfb diesen Schwellwert überschreitet, wird darauf geschlossen, daß eine spontane Dynamikanforderung vorliegt und es wird das entsprechende Bit kfbbit gesetzt. Das Bit wird dabei nur gesetzt, wenn die Stellung des Fahrpedales größer ist als 0. Vorteilhaft kann auch der Schwellwert durch die Größe bkz variiert werden, so daß auch hierdurch nochmals eine sportliche Fahrweise bzw. eine eher ruhige Fahrweise berücksichtigt werden kann.

Das Bit kfbbit wird zurückgesetzt, sobald der Schwellwert durch die Größe kfb wieder unterschritten wird und das Fahrpedal in der Stellung 0 ist. Dadurch können vorteilhaft "Sprünge" im Fahrverhalten des Fahrzeuges vermieden werden.

Weiterhin ist ein Block 106 vorgesehen, in dem erkannt wird, ob es sich um einen nervösen Fahrzeugführer handelt, dessen Aktionen vergleichsweise hektisch und dabei wenig zielgerichtet sind. Dies kann beispielsweise erkannt werden durch das Verfahren der zeitgleich angemeldeten Anmeldung der Anmelderin mit demselben Anmeldetag und dem Aktenzeichen 197 30 904.6 des deutschen Patentamtes.

Es wird ein Nervositätsbit nb gesetzt, wenn der Fahrzeugführer als nervös eingestuft wird. Wenn dieses Nervositätsbit nb gesetzt ist, wird verhindert, daß das Bit kfbbit gesetzt wird.

Entsprechend der Darstellung des Blockes 107 erfolgt ein der erkannten spontanen Dynamikanforderung entsprechender Eingriff in das Motor-/Getriebemanagement, wenn das Bit kfbbit gesetzt ist. Dieser Eingriff kann dabei noch in Abhängigkeit von der Größe kfb durchgeführt werden, wodurch nochmals das Ausmaß der Dynamikanforderung berücksichtigt werden kann.

### Patentansprüche

1. Verfahren zur Erkennung einer spontanen Dynamikanforderung eines Führers eines Kraftfahrzeuges, wobei

   - eine von einer aktuellen Betätigungsgeschwindigkeit (dpw) des Fahrpedals abhängige Größe (kfb) mit einem Schwellwert verglichen wird (105),
   - die Dynamikanforderung erkannt wird, wenn die genannte Größe (kfb) oberhalb des Schwellwertes liegt (105) und bei der Ermittlung der Größe (kfb) berücksichtigt wird, wie der Fahrzeugführer das Fahrpedal normalerweise betätigt (104),

**dadurch gekennzeichnet,**
**daß** zur Erkennung einer spontanen Dynamikanforderung bei einer als sportlich erkannten Fahrweise eine größere aktuellen Betätigungsgeschwindigkeit (dpw) notwendig ist als bei einer als ruhig erkannten Fahrweise.

2. Verfahren nach Anspruch 1,
**dadurch gekennzeichnet,**
**daß** die Berücksichtigung erfolgt, indem laufend die Betätigungsgeschwindigkeit ermittelt und zumindest in bestimmten Fahrsituationen statistisch ausgewertet wird (102).

3. Verfahren nach Anspruch 2,
**dadurch gekennzeichnet,**
**daß** bei der Auswertung die Werte der jüngeren Vergangenheit eine größere Gewichtung erhalten als die Werte der länger zurückliegenden Vergangenheit (102).

4. Verfahren nach einem der Ansprüche 1 bis 3,
**dadurch gekennzeichnet,**
**daß** die erfaßte Winkelstellung des Fahrpedals gefiltert und differenziert wird, wobei bei einer Rücknahme des Fahrpedals mit einer Winkelgeschwindigkeit oberhalb einer Schwelle die Filterung unterbunden wird (103).

5. Verfahren nach einem der Ansprüche 1 bis 4,
**dadurch gekennzeichnet, daß** bei einer erkannten Dynamikanforderung diese für einige Zeit bestehen bleibt, wobei diese Zeit länger ist bei einer sportlichen Fahrweise als bei einer ruhigen Fahrweise (104).

6. Verfahren nach einem der Ansprüche 1 bis 5,
**dadurch gekennzeichnet, daß** für die erkannte Dynamikanforderung eine Variable bzw. ein Bit (kfbbit) gesetzt wird (105), wobei diese Variable bzw. das Bit (kfbbit) gesetzt wird, sobald die Dynamikanforderung erkannt wird und daß die Variable bzw. das Bit (kfbbit) zurückgesetzt wird, sobald die Bedingungen der Dynamikanforderung nicht mehr vorliegen und der Fahrpedalwinkel gleich 0 ist (105).

7. Verfahren nach einem der Ansprüche 1 bis 6,
**dadurch gekennzeichnet, daß** mit der Betätigungsgeschwindigkeit (dpw) des Fahrpedals und der normalen Betätigungsgeschwindigkeit (emp) der Wert (kfb) gebildet wird (104), der mit dem Schwellwert verglichen wird (105).

8. Verfahren nach einem der Ansprüche 1 bis 7,
**dadurch gekennzeichnet, daß** der Schwellwert abhängig von der Fahrweise des Fahrzeugführers (bkz) verändert wird (105).

9. Verfahren nach einem der Ansprüche 1 bis 8,
**dadurch gekennzeichnet, daß** bei einer erkannten nervösen Bedienung des Fahrzeuges (nb, 106) durch den Fahrzeugführer die Erkennung einer spontanen Dynamikanforderung ausgesetzt wird.

**Claims**

1. A process for identifying a sudden request for additional power made by a driver of a motor vehicle in which

   - a value (kfb) dependent on a current actuating speed (dpw) of the accelerator pedal is compared with a threshold value (105),
   - the request for additional power is identified if the aforementioned value (kfb) lies above the threshold value (105) and
   - the evaluation of the value (kfb) takes into account the manner in which the vehicle driver normally actuates the accelerator pedal (104),

   **characterised in that**
   the identification of a sudden request for additional power in the case of a driving style recognised as sporty requires a higher current actuating speed (dpw) than with a driving style recognised as quiet.

2. A process in accordance with claim 1,
   **characterised in that**
   it is taken into account by continuously determining the actuating speed and evaluating it statistically at least in certain driving situations (102).

3. A process in accordance with claim 2,
   **characterised in that**
   in the evaluation values from the more recent past are given a greater weighting than values from the more distant past (102).

4. A process in accordance with one of claims 1 to 3,
   **characterised in that**
   the angular position of the accelerator pedal measured is filtered and differentiated, filtering being suppressed when the accelerator pedal is released with an angular velocity above a threshold value (104).

5. A process in accordance with one of claims 1 to 4,
   **characterised in that**
   when a request for additional power is identified, it is maintained for a certain time, this time being longer for a sporty driving style than for a quiet driving style (104).

6. A process in accordance with one of claims 1 to 5, **characterised in that**
a variable or a bit (kfbbit) is set for the identified request for additional power (105), this variable or bit (kfbbit) being set as soon as the request for additional power is identified, and the variable or bit is restored as soon as the conditions for the request for additional power cease to exist and the accelerator pedal angle is equal to 0 (105).

7. A process in accordance with one of claims 1 to 6, **characterised in that**
the actuating speed (dpw) of the accelerator pedal and the normal actuating speed (emp) are used to form the value (kfb) (104) which is compared with the threshold value (105).

8. A process in accordance with one of claims 1 to 7, **characterised in that**
the threshold value is changed dependent on the driving style of the vehicle driver (bkz) (105).

9. A process in accordance with one of claims 1 to 8, **characterised in that**
if the vehicle driver is identified to be driving the vehicle nervously (nb, 106), the identification of sudden requests for additional power is interrupted.

**Revendications**

1. Procédé pour identifier une demande dynamique spontanée d'un conducteur d'un véhicule automobile, selon lequel

   - une grandeur (kfb), qui dépend d'une vitesse actuelle d'actionnement (dpw) de la pédale d'accélérateur est comparée à une valeur de seuil (105),
   - la demande dynamique est identifiée lorsque la grandeur indiquée (kfb) est supérieure à la valeur de seuil (105), et
   - lors de la détermination de la valeur (kfb), le mode d'actionnement normal (104) de la pédale d'accélérateur par le conducteur du véhicule est pris en compte,

   **caractérisé en ce**
   **que** pour l'identification d'une demande dynamique spontanée, dans le cas d'un type de conduite identifié comme sportif, une vitesse d'actionnement actuelle (dpw) plus importante que dans le cas d'un type de conduite identifié comme calme est nécessaire.

2. Procédé selon la revendication 1, **caractérisé en ce que** la prise en compte s'effectue par le fait que la vitesse d'actionnement est déterminée en permanence et est évaluée statistiquement (102) au moins dans certaines situations de conduite.

3. Procédé selon la revendication 2, **caractérisé en ce que**, lors de l'évaluation, les valeurs du passé récent ont une pondération plus grande que les valeurs du passé plus lointain (102).

4. Procédé selon les revendications 1 à 3, **caractérisé en ce que** la position angulaire détectée de la pédale d'accélérateur est filtrée et différentiée, auquel cas lors d'un recul de la pédale d'accélérateur avec une vitesse angulaire supérieure à un seuil, le filtrage est supprimé (103).

5. Procédé selon l'une des revendications 1 à 4, **caractérisé en ce que** dans le cas d'une demande dynamique identifiée, cette demande subsiste pendant une certaine durée, cette durée étant plus grande dans le cas d'un type de conduite sportif que d'un type de conduite calme (104).

6. Procédé selon l'une des revendications 1 à 5, **caractérisé en ce que** pour la demande dynamique identifiée, une variable ou un bit (kfbbit) est positionné (105), cette variable ou le bit (kfbbit) étant positionné dès que la demande dynamique est identifiée, et que la variable ou le bit (kfbbit) est ramené à zéro dès que les conditions de la demande dynamique ne sont plus présentes et que l'angle de la pédale d'accélérateur est égal à 0 (105).

7. Procédé selon l'une des revendications 1 à 6, **caractérisé en ce que** la valeur (kfb), qui est comparée (105) à la valeur de seuil, est formée (104) avec la vitesse d'actionnement (dpw) de la pédale d'accélérateur et la vitesse d'actionnement normale (emp).

8. Procédé selon l'une des revendications 1 à 7, **caractérisé en ce que** la valeur de seuil est modifiée (105) en fonction du type de conduite du conducteur du véhicule (bkz).

9. Procédé selon l'une des revendications 1 à 8, **caractérisé en ce que** dans le cas d'une conduite nerveuse identifiée du véhicule (nb,106) par le conducteur du véhicule, l'identification d'une demande dynamique spontanée est supprimée.